# EUROPEAN PATENT APPLICATION

(11) **EP 4 297 448 A1**
(43) Date of publication of application: **27.12.2023**
(21) Application number: 22755477.1
(22) Date of filing: 17.01.2022
(51) Int. Cl.: H04W 8/06, H04W 76/27

(54) **STEERING OF ROAMING (SOR) INFORMATION PROCESSING METHOD AND DEVICE, AND PROCESSOR-READABLE STORAGE MEDIUM**

(30) Priority: 18.02.2021 CN 202110190112
(71) Applicant: Datang Mobile Communications Equipment Co., Ltd., Beijing 100085 (CN)
(72) Inventor: JIANG, Yong, Beijing 100085 (CN)
(74) Representative: dompatent von Kreisler Selting Werner - Partnerschaft von Patent- und Rechtsanwälten mbB
(86) International application number: PCT/CN2022/072397
(87) International publication number: WO 2022/174704

(57) **Abstract**

An SOR information processing method, a device and a processor-readable storage medium are provided, related to the technical field of communication. The method includes: receiving a first request message sent by a VPLMN AMF, where the first request message is configured to request to obtain SOR information, the first request message includes first location information of a terminal UE, and the VPLMN is a shared PLMN; determining SOR information according to the first location information; sending the SOR information to the UE, where the SOR information includes a preferred PLMN and access technology combinations list.

## Description

### CROSS REFERENCE OF RELATED APPLICATION

The present disclosure claims a priority of Chinese patent disclosure No. 202110190112.8 filed on February 18, 2021, which is incorporated herein by reference in its entirety.

### TECHNICAL FIELD

The present disclosure relates to the technical field of communication, and in particular, relates to a Steering of Roaming (SOR) information processing method, a device and a processor-readable storage medium.

### BACKGROUND

In definition of the traditional Public Land Mobile Network (PLMN) ID, the mobile country code (Mobile Country Code, MCC) of PLMN ID is associated with the country of the operator, that is, the home public land mobile network (Home PLMN, HPLMN) can determine the corresponding preferred PLMN and access technology combinations (preferred PLMN/access technology combinations) list for the user equipment (User Equipment, UE) according to the PLMN ID information of the operator.

However, satellite access networks can provide global network coverage, and operators that provide satellite access services are considered as shared PLMNs (Shared PLMNs). The MCC format in the Shared PLMN ID of the shared PLMN is 9xx, and the PLMN is not associated with any country. If the VPLMN (Visited PLMN, visiting PLMN) selected by the UE in the roaming state is a shared PLMN, the HPLMN cannot determine the accurate preferred PLMN/access technology combinations list and other information for the UE based on the VPLMN ID, resulting in a failure to provide the UE with accurate SOR service.

### SUMMARY

Embodiments of the present disclosure provide a an SOR information processing method, a device and a processor-readable storage medium, so as to solve the problem of how to provide accurate SOR services for UEs when the UE accesses a shared PLMN .

In order to solve the above-mentioned technical problems, the present disclosure is implemented as follows:
In a first aspect, a Steering of Roaming (SOR) information processing method is provided in an embodiment of the present disclosure, performed by a Home Public Land Mobile Network Unified Data Management (HPLMN UDM), including:
receiving a first request message sent by a Visited PLMN Access and Mobility Management Function (VPLMN AMF), where the first request message is configured to request to obtain SOR information, the first request message includes first location information of a terminal UE, and the VPLMN is a shared PLMN;
determining SOR information according to the first location information;
sending the SOR information to the UE, where the SOR information includes a preferred PLMN and access technology combinations list.

In some embodiments, the first location information is determined by the VPLMN AMF, or the first location information is determined by the UE.

In some embodiments, the determining the SOR information according to the first location information includes:
sending a second request message to a Steering of Roaming Application Function (SOR-AF), where the second request message include the first location information, and the second request message is configured to request to obtain the SOR information;
receiving the SOR information sent by the SOR-AF.

In some embodiments, the sending the second request message to the SOR-AF includes:
when the SOR information is not able to be determined according to the first location information, sending the second request message to the SOR-AF.

In some embodiments, the determining the SOR information according to the first location information includes:
when the SOR information is not able to be determined according to the first location information, obtaining second location information of the LTE from a positioning platform;
determining the SOR information according to the second location information.

In some embodiments, the determining the SOR information according to the second location information includes:
sending a second request message to an SOR-AF, where the second request message includes the second location information, and the second request message is configured to request to obtain the SOR information;
receiving the SOR information sent by the SOR-AF.

In some embodiments, the SOR information further includes the first location information;
the method further include:
receiving a confirmation message sent by the UE, where the confirmation message is sent by the LTE when the LTE verifies the first location information according to location information determined by the UE and a verification result indicates a mismatching, where the confirmation message includes indication information configured to indicate that the first location information is not matched.

In some embodiments, the method further includes:
after the LTE completes a registration procedure for the VPLMN, obtaining second location information of the LTE from a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE.

In a second aspect, a Steering of Roaming (SOR) information processing method is provided in an embodiment of the present disclosure, performed by a Home Public Land Mobile Network Unified Data Management (HPLMN UDM), including:
receiving a first request message sent by a Visited PLMN Access and Mobility Management Function (VPLMN AMF), where the first request message is configured to request to obtain SOR information, and the VPLMN is a shared PLMN;
when the first request message does not include location information of a LTE, obtaining the location information of the LTE from a positioning platform;
determining the SOR information according to the location information, where the SOR information include a preferred PLMN and access technology combinations list; and
sending the SOR information to the UE.

In a third aspect, a Steering of Roaming (SOR) information processing method is provided in an embodiment of the present disclosure, performed by a Steering of Roaming Application Function (SOR-AF), including:
receiving a second request message sent by a Home Public Land Mobile Network Unified Data Management (HPLMN UDM), where the second request message is configured to request to obtain SOR information, the second request message includes first location information of a LTE, the first location information is obtained by the HPLMN UDM from a received first request message sent by a Visited PLMN Access and Mobility Management Function (VPLMN AMF), and the VPLMN is a shared PLMN;
determining the SOR information according to the first location information, where the SOR information includes a preferred PLMN and access technology combinations list; and
sending the SOR information to the HPLMN UDM, to enable the HPLMN UDM to forward the SOR information to the UE.

In some embodiments, the first location information is determined by the VPLMN AMF, or the first location information is determined by the UE.

In some embodiments, the determining the SOR information according to the first location information includes:
when the SOR information is not able be determined according to the first location information, obtaining second location information of the LTE from a positioning platform;
determining the SOR information according to the second location information.

In some embodiments, the method further includes:
after the LTE completes a registration procedure for the VPLMN, obtaining second location information of the LTE through a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE.

In a fourth aspect, a Steering of Roaming (SOR) information processing method is provided in an embodiment of the present disclosure, performed by a Steering of Roaming Application Function (SOR-AF), including:
receiving a second request message sent by a Home Public Land Mobile Network Unified Data Management (HPLMN UDM), where the second request message is configured to request to obtain SOR information, the second request message includes second location information of the UE, and the second location information of the UE is obtained by the HPLMN UDM from a positioning platform;
determining the SOR information according to the second location information, where the SOR information includes a preferred PLMN and access technology combinations list; and
sending the SOR information to the HPLMN UDM, to enable the HPLMN UDM to forward the SOR information to the UE.

In a fifth aspect, a Steering of Roaming (SOR) information processing method is provided in an embodiment of the present disclosure, performed by a Steering of Roaming Application Function (SOR-AF), including:
receiving a second request message sent by a Home Public Land Mobile Network Unified Data Management (HPLMN UDM), where the second request message is configured to request to obtain SOR information;
when the second request message does not include location information of the UE, obtaining the location information of the LTE from a positioning platform;
determining the SOR information according to the location information, where the SOR information includes a preferred PLMN and access technology combinations list; and
sending the SOR information to the HPLMN UDM, to enable the HPLMN UDM to forward the SOR information to the UE.

In a sixth aspect, a Steering of Roaming (SOR) information processing device is provided in an embodiment of the present disclosure, applied to a Home Public Land Mobile Network Unified Data Management (HPLMN UDM), including a first memory, a first transceiver and a first processor;
the first memory is configured to store computer programs; the first transceiver is configured to send and receive data under a control of the first processor; the first processor is configured to read the computer programs in the first memory to perform:
receiving a first request message sent by a Visited PLMN Access and Mobility Management Function (VPLMN AMF), where the first request message is configured to request to obtain SOR information, the first request message includes first location information of a terminal UE, and the VPLMN is a shared PLMN;
determining SOR information according to the first location information;
sending the SOR information to the UE, where the SOR information includes a preferred PLMN and access technology combinations list.

In some embodiments, the first location information is determined by the VPLMN AMF, or the first location information is determined by the UE.

In some embodiments, the determining the SOR information according to the first location information performed by the first processor includes:
sending a second request message to a Steering of Roaming Application Function (SOR-AF), where the second request message include the first location information, and the second request message is configured to request to obtain the SOR information;
receiving the SOR information sent by the SOR-AF.

In some embodiments, the sending the second request message to the SOR-AF performed by the first processor includes:
when the SOR information is not able to be determined according to the first location information, sending the second request message to the SOR-AF.

In some embodiments, the determining the SOR information according to the first location information performed by the first processor includes:
when the SOR information is not able to be determined according to the first location information, obtaining second location information of the LTE from a positioning platform;
determining the SOR information according to the second location information.

In some embodiments, the determining the SOR information according to the second location information performed by the first processor includes:
sending a second request message to an SOR-AF, where the second request message includes the second location information, and the second request message is configured to request to obtain the SOR information;
receiving the SOR information sent by the SOR-AF.

In some embodiments, the SOR information further includes the first location information;
the first processor is further configured to perform:
receiving a confirmation message sent by the UE, where the confirmation message is sent by the LTE when the LTE verifies the first location information according to location information determined by the UE and a verification result indicates a mismatching, where the confirmation message includes indication information configured to indicate that the first location information is not matched.

In some embodiments, the first processor is further configured to perform:
after the LTE completes a registration procedure for the VPLMN, obtaining second location information of the LTE from a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE.

In a seventh aspect, a Steering of Roaming (SOR) information processing device is provided in an embodiment of the present disclosure, applied to a Home Public Land Mobile Network Unified Data Management (HPLMN UDM), including a first memory, a first transceiver and a first processor:
the first memory is configured to store computer programs; the first transceiver is configured to send and receive data under a control of the first processor; the first processor is configured to read the computer programs in the first memory to perform:
receiving a first request message sent by a Visited PLMN Access and Mobility Management Function (VPLMN AMF), where the first request message is configured to request to obtain SOR information, and the VPLMN is a shared PLMN;
when the first request message does not include location information of a LTE, obtaining the location information of the LTE from a positioning platform;
determining the SOR information according to the location information, where the SOR information include a preferred PLMN and access technology combinations list; and
sending the SOR information to the UE.

In an eighth aspect, a Steering of Roaming (SOR) information processing device is provided in an embodiment of the present disclosure, applied to a Steering of Roaming Application Function (SOR-AF), including a second memory, a second transceiver and a second processor:
the second memory is configured to store computer programs; the second transceiver is configured to send and receive data under a control of the second processor; the second processor is configured to read the computer programs in the second memory to perform:
receiving a second request message sent by a Home Public Land Mobile Network Unified Data Management (HPLMN UDM), where the second request message is configured to request to obtain SOR information, the second request message includes first location information of a LTE, the first location information is obtained by the HPLMN UDM from a received first request message sent by a Visited PLMN Access and Mobility Management Function (VPLMN AMF), and the VPLMN is a shared PLMN;
determining the SOR information according to the first location information, where the SOR information includes a preferred PLMN and access technology combinations list; and
sending the SOR information to the HPLMN UDM, to enable the HPLMN UDM to forward the SOR information to the UE.

In some embodiments, the first location information is determined by the VPLMN AMF, or the first location information is determined by the UE.

In some embodiments, the determining the SOR information according to the first location information performed by the second processor includes:
when the SOR information is not able be determined according to the first location information, obtaining second location information of the LTE from a positioning platform;
determining the SOR information according to the second location information.

In some embodiments, the second processor is further configured to perform:
after the LTE completes a registration procedure for the VPLMN, obtaining second location information of the LTE through a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE.

In a ninth aspect, a Steering of Roaming (SOR) information processing device is provided in an embodiment of the present disclosure, applied to a Steering of Roaming Application Function (SOR-AF), including a second memory, a second transceiver and a second processor:
the second memory is configured to store computer programs; the second transceiver is configured to send and receive data under a control of the second processor; the second processor is configured to read the computer programs in the second memory to perform:
receiving a second request message sent by a Home Public Land Mobile Network Unified Data Management (HPLMN UDM), where the second request message is configured to request to obtain SOR information, the second request message includes second location information of the UE, and the second location information of the UE is obtained by the HPLMN UDM from a positioning platform;
determining the SOR information according to the second location information, where the SOR information includes a preferred PLMN and access technology combinations list; and
sending the SOR information to the HPLMN UDM, to enable the HPLMN UDM to forward the SOR information to the UE.

In a tenth aspect, a Steering of Roaming (SOR) information processing device is provided in an embodiment of the present disclosure, applied to a Steering of Roaming Application Function (SOR-AF), including a second memory, a second transceiver and a second processor:
the second memory is configured to store computer programs; the second transceiver is configured to send and receive data under a control of the second processor; the second processor is configured to read the computer programs in the second memory to perform:
receiving a second request message sent by a Home Public Land Mobile Network Unified Data Management (HPLMN UDM), where the second request message is configured to request to obtain SOR information;
when the second request message does not include location information of the UE, obtaining the location information of the LTE from a positioning platform;
determining the SOR information according to the location information, where the SOR information includes a preferred PLMN and access technology combinations list; and
sending the SOR information to the HPLMN UDM, to enable the HPLMN UDM to forward the SOR information to the UE.

In an eleventh aspect, a Steering of Roaming (SOR) information processing device is provided in an embodiment of the present disclosure, applied to a Home Public Land Mobile Network Unified Data Management (HPLMN UDM), including:
a first receiving unit, configured to receive a first request message sent by a Visited PLMN Access and Mobility Management Function (VPLMN AMF), where the first request message is configured to request to obtain SOR information, the first request message includes first location information of a terminal UE, and the VPLMN is a shared PLMN;
a first determining unit, configured to determine SOR information according to the first location information; and
a first sending unit, configured to send the SOR information to the UE, where the SOR information includes a preferred PLMN and access technology combinations list.

In some embodiments, the first location information is determined by the VPLMN AMF, or the first location information is determined by the UE.

In some embodiments, the determining the SOR information according to the first location information performed by the first determining unit includes:
sending a second request message to a Steering of Roaming Application Function (SOR-AF), where the second request message include the first location information, and the second request message is configured to request to obtain the SOR information;
receiving the SOR information sent by the SOR-AF.

In some embodiments, the sending the second request message to the SOR-AF performed by the first determining unit includes:
when the SOR information is not able to be determined according to the first location information, sending the second request message to the SOR-AF.

In some embodiments, the determining the SOR information according to the first location information performed by the first determining unit includes:
when the SOR information is not able to be determined according to the first location information, obtaining second location information of the LTE from a positioning platform;
determining the SOR information according to the second location information.

In some embodiments, the determining the SOR information according to the second location information performed by the first determining unit includes:
sending a second request message to an SOR-AF, where the second request message includes the second location information, and the second request message is configured to request to obtain the SOR information;
receiving the SOR information sent by the SOR-AF.

In some embodiments, the SOR information further includes the first location information;
the method further include:
receiving a confirmation message sent by the UE, where the confirmation message is sent by the LTE when the LTE verifies the first location information according to location information determined by the UE and a verification result indicates a mismatching, where the confirmation message includes indication information configured to indicate that the first location information is not matched.

In some embodiments, the device further includes a first processing unit configured to:
after the LTE completes a registration procedure for the VPLMN, obtain second location information of the LTE from a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE.

In a twelfth aspect, a Steering of Roaming (SOR) information processing device is provided in an embodiment of the present disclosure, applied to a Home Public Land Mobile Network Unified Data Management (HPLMN UDM), including:
a second receiving unit, configured to receive a first request message sent by a Visited PLMN Access and Mobility Management Function (VPLMN AMF), where the first request message is configured to request to obtain SOR information, and the VPLMN is a shared PLMN;
a first obtaining unit, configured to, when the first request message does not include location information of a LTE, obtain the location information of the LTE from a positioning platform;
a second determining unit, configured to determine the SOR information according to the location information, where the SOR information include a preferred PLMN and access technology combinations list; and
a second sending unit, configured to send the SOR information to the UE.

In a thirteenth aspect, a Steering of Roaming (SOR) information processing device is provided in an embodiment of the present disclosure, applied to a Steering of Roaming Application Function (SOR-AF), including:
a third receiving unit, configured to receive a second request message sent by a Home Public Land Mobile Network Unified Data Management (HPLMN UDM), where the second request message is configured to request to obtain SOR information, the second request message includes first location information of a UE, the first location information is obtained by the HPLMN UDM from a received first request message sent by a Visited PLMN Access and Mobility Management Function (VPLMN AMF), and the VPLMN is a shared PLMN;
a third determining unit, configured to determine the SOR information according to the first location information, where the SOR information includes a preferred PLMN and access technology combinations list; and
a third sending unit, configured to send the SOR information to the HPLMN UDM, to enable the HPLMN UDM to forward the SOR information to the UE.

In a fourteenth aspect, a Steering of Roaming (SOR) information processing device is provided in an embodiment of the present disclosure, applied to a Steering of Roaming Application Function (SOR-AF), including:
a fourth receiving unit, configured to receive a second request message sent by a Home Public Land Mobile Network Unified Data Management (HPLMN UDM), where the second request message is configured to request to obtain SOR information, the second request message includes second location information of the UE, and the second location information of the LTE is obtained by the HPLMN UDM from a positioning platform;
a fourth determining unit, configured to determine the SOR information according to the second location information, where the SOR information includes a preferred PLMN and access technology combinations list; and
a fourth sending unit, configured to send the SOR information to the HPLMN UDM, to enable the HPLMN UDM to forward the SOR information to the UE.

In a fifteenth aspect, a Steering of Roaming (SOR) information processing device is provided in an embodiment of the present disclosure, applied to a Steering of Roaming Application Function (SOR-AF), including:
a fifth receiving unit, configured to receive a second request message sent by a Home Public Land Mobile Network Unified Data Management (HPLMN UDM), where the second request message is configured to request to obtain SOR information;
a second obtaining unit, configured to, when the second request message does not include location information of the UE, obtaining the location information of the LTE from a positioning platform;
a fifth determining unit, configured to determine the SOR information according to the location information, where the SOR information includes a preferred PLMN and access technology combinations list; and
a fifth sending unit, configured to send the SOR information to the HPLMN UDM, to enable the HPLMN UDM to forward the SOR information to the UE.

In a sixth aspect, a processor-readable storage medium is provided in an embodiment of the present disclosure, where the processor-readable storage medium stores a computer program, the computer program is configured to enable the processor to perform a Steering of Roaming (SOR) information processing method in the first aspect, or an SOR information processing method in a second aspect, or an SOR information processing method in a third aspect, or an SOR information processing method in a fourth aspect, or an SOR information processing method in a fifth aspect.

According to the embodiments of the present disclosure, when the UE selects the shared PLMN as the VPLMN to access the 3GPP network, the HPLMN determines the location information of the UE, and then determines the SOR information such as the preferred PLMN/access technology combinations list of the UE based on the location information of the LTE, thereby avoiding a failure to determine accurately the preferred PLMN/access technology combinations list and other SOR information for LTE due to the shared PLMN ID, so as to effectively improve the service quality of the SOR service and improve the user experience in roaming state.

### BRIEF DESCRIPTION OF THE DRAWINGS

Fig. 1a is a first schematic view of a relevant PLMN registration process;
Fig. 1b is a second schematic view of a relevant PLMN registration process;
Fig. 2 is a first schematic flow chart of an SOR information processing method in an embodiment of the present disclosure;
Fig. 3 is a second schematic flow chart of an SOR information processing method in an embodiment of the present disclosure;
Fig. 4a is a third schematic flow chart of an SOR information processing method in an embodiment of the present disclosure;
Fig. 4b is a fourth schematic flow chart of an SOR information processing method in an embodiment of the present disclosure;
Fig. 4c is a fifth schematic flow chart of an SOR information processing method in an embodiment of the present disclosure;
Fig. 5 is a first structural schematic views of a shared PLMN device in an embodiment of the present disclosure;
Fig. 6 is a second structural schematic view of a shared PLMN device in an embodiment of the present disclosure;
Fig. 7 is a third structural schematic view of a shared PLMN device in an embodiment of the present disclosure; and
Fig. 8 is a fourth structural schematic view of a shared PLMN device in an embodiment of the present disclosure.

### DETAILED DESCRIPTION

The following will clearly and completely describe the technical solutions in the embodiments of the present disclosure with reference to the accompanying drawings in the embodiments of the present disclosure. Apparently, the described embodiments are part of the embodiments of the present disclosure, not all of them. Based on the embodiments in the present disclosure, all other embodiments obtained by persons of ordinary skill in the art without creative efforts fall within the protection scope of the present disclosure.

The terms "first", "second" and the like in the specification and claims of the present disclosure are configured to distinguish similar objects, and are not configured to describe a specific order or sequence. It should be understood that the terms so used are interchangeable under appropriate circumstances such that the embodiments of the present disclosure can be practiced in sequences other than those illustrated or described herein and that references to "first" and "second" are distinguished. It is usually one category, and the number of objects is not limited. For example, there may be one or more first objects. In addition, "and/or" in the description and claims means at least one of the connected objects, and the character "/" generally means that the related objects are in an "or" relationship.

It is worth pointing out that the technology described in the embodiments of the present disclosure is not limited to the Long Term Evolution (LTE)/LTE-Advanced (LTE-A) system, and can also be used in other wireless communication systems, such as Code Division Multiple Access (CDMA), Time Division Multiple Access (TDMA), Frequency Division Multiple Access (FDMA), Orthogonal Frequency Division Multiple Access, OFDMA), Single-carrier Frequency-Division Multiple Access (Single-carrier Frequency-Division Multiple Access, SC-FDMA) and other systems. The terms "system" and "network" in the embodiments of the present disclosure are often used interchangeably, and the described technologies can be used for the above-mentioned systems and radio technologies as well as other systems and radio technologies. However, the following description describes the New Radio (NR) system for example purposes, and uses NR terminology in most of the following description, although these techniques can also be applied to applications other than NR system applications, such as the sixth generation (6th Generation, 6G) communication system.

In order to better understand the solution provided by the present disclosure, the following content is first described:

Shared PLMN (MCC is 9xx) is a type of PLMN with designated PLMN ID. This PLMN is not associated with any country, but can provide communication services worldwide.

In the relevant PLMN registration process, no shared PLMN is involved, specifically:
(1) The MCC of the PLMN ID of the relevant PLMN is associated with the operator's country:
   A country is identified by a single MCC value defined, with the exception of the following MCC ranges, which identify a single country:
   - value 310 to 316 (US);
   - values 404 to 406 (India);
   - value 440 to 441 (Japan);
   - value 460 to 461 (China);
   - Value 234 to 235 (UK).
(2) When the UE selects a PLMN, it always selects a higher priority PLMN as the selected VPLMN according to the same MCC.
(3) During the Steering of Roaming (SOR) process, the Steering of Roaming Application Function (SOR-AF) always determines whether to send a new PLMN selection list to the UE based on information such as the VPLMN ID and Contents of the PLMN selection list. However, if the UE chooses to register with a shared PLMN, SOR-AF cannot determine the current country of the UE based on VPLMN ID and other information, and specify the corresponding PLMN selection list strategy.

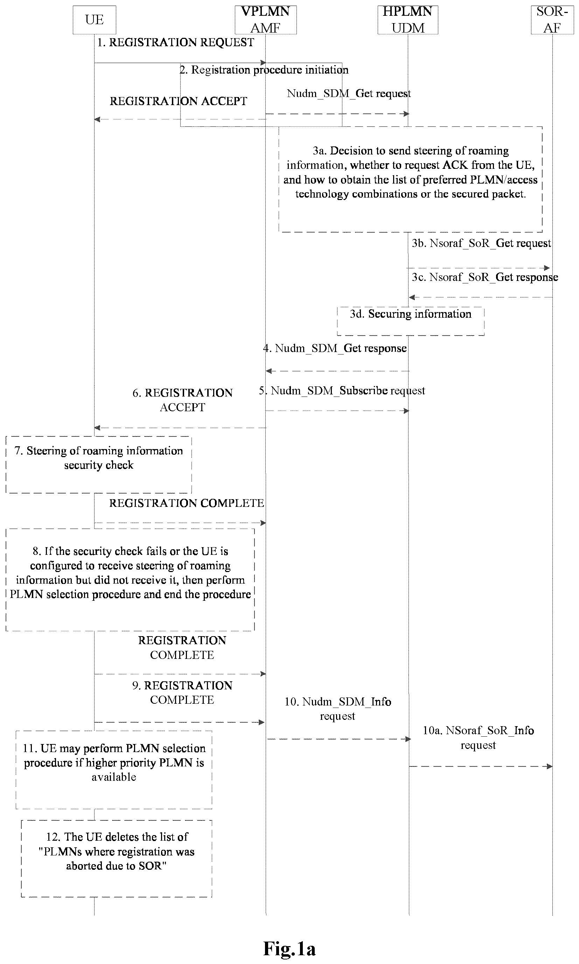

Referring to Fig. 1a, the figure shows the SOR process in the LTE registration VPLMM process, including the following steps:
1. The UE starts the registration process by sending a Registration Request (Registration Request) message to the VPLMN Access and Mobility Management Function (AMF). The registration process can include initial registration, emergency registration or mobile registration update process.
2. After receiving the Registration Request message, the VPLMN AMF performs the normal registration process.

Scenario 1). If the VPLMN AMF does not have the subscription data of the UE, the VPLMN AMF wakes up the Nudm_SDM_Get service operation to obtain the subscription information from the HPLMN unified data management function (Unified Data Management, UDM);
Scenario 2). If the VPLMN AMF already has the subscription data of the UE and:
   i) The LTE context indicating the initial registration carried in the Registration Request message, where the "SOR Update Indicator for Initial Registration (SOR Update Indicator for Initial Registration)" information is " When the LTE performs the NAS registration type "initial registration", the UDM request AMF retrieves SOR information (the UDM requests the AMF to retrieve SOR information when the UE performs NAS registration type 'initial registration')";
   or ii) LTE context indicating emergency registration carried in the Registration Request message, where the "SOR Update Indicator for Emergency Registration (SOR Update Indicator for Emergency Registration)" information is " When the LTE performs NAS registration type "emergency registration", the UDM request AMF retrieves SOR information (the UDM requests the AMF to retrieve SOR information when the UE performs NAS registration type 'emergency registration')";

Then the VPLMN AMF wakes up the Nudm_SDM_Get service operation, and retrieves the SOR information from the HPLMN UDM.

3. 3a ) If the contract requires HPLMN to provide SOR information to LTE during VLMN initial registration, HPLMN UDM must provide it, that is, HPLMN UDM should send SOR information to UE when LTE performs VPLMN initial registration. If the user subscription information does not indicate to send the SOR information when initially registering with the VPLMN, the HPLMN UDM can provide the SOR information to the UE based on the operation policy.

When the UE performs the initial registration of the VPLMN, if the HPLMN UDM will provide the UE with SOR information, and the policy enabled by the SOR-AF of the HPLMN is default, the HPLMN UDM will determine the SOR information, which may include: preferred PLMN/access technology Combinations list, and valid roaming guide connection mode control information (SOR-connected mode control information, SOR-CMCI) or valid security package (for example: all retrieved from the user data repository (User Data Repository, UDR)), and then execute to step 3d).

When UE performs initial registration of VPLMN, if HPLMN UDM will provide SOR information to LTE, and the policy enabled by SOR-AF of HPLMN exists, then SOR information will be determined by SOR-AF, which may include: preferred PLMN/access technology A list of combinations, and either a valid SOR-CMCI or a valid security package (e.g., both retrieved from UDR). Specifically, the HPLMN UDM obtains the SOR information from the SOR-AF through steps 3b and 3c, and then proceeds to step 3d).
3b) HPLMN UDM sends Nsoraf_SOR_Get request to SOR-AF (including VPLMN ID, UE User Permanent Identifier (Subscriber User Permanent Identifier, SUPI), access type parameter (access type)) to SOR-AF. The VPLMN ID and access type parameters indicate the information of the PLMN that the UE is currently registering, and the information is stored in the HPLMN UDM.
3c) SOR-AF provides SOR information to HPLMN UDM through Nsoraf SOR Get response (which contains the preferred PLMN and access technology combinations list, and SOR-CMCI or security package, or only the preferred PLMN and access technology combinations list);
3d) HPLMN UDM obtains secure SOR information;
4. HPLMN UDM sends SOR information to VPLMN AMF through Nudm_SDM_Get response message;
5. The VPLMN AMF notifies the HPLMN UDM of changing the subscription subscription data through the Nudm_SDM_Subscribe request message, including changing the SOR information;
6. The VPLMN AMF transparently sends the received SOR information to the UE through the REGISTRATION ACCEPT message;
7. UE performs SOR information security check;
8. If the UE security check fails (security check fails), or the UE has been configured to receive SOR information, but has not received SOR information (UE is configured to receive steering of roaming information but did not receive it), then the UE performs the PLMN selection process , and end the process;
9. If the HPLMN UDM requests the UE to confirm, the UE include the SOR transparent container in the REGISTRATION COMPLETE message;
10. If the VPLMN UDM include the SOR transparent container in the REGISTRATION COMPLETE message, send it to the HPLMN UDM through the Nudm_SDM_Info request message. HPLMN UDM verification confirmation message;
10a) HPLMN UDM sends UE's acknowledgment message to SOR-AF;
11. The UE can perform the PLMN selection process according to the latest PLMN selection list information.

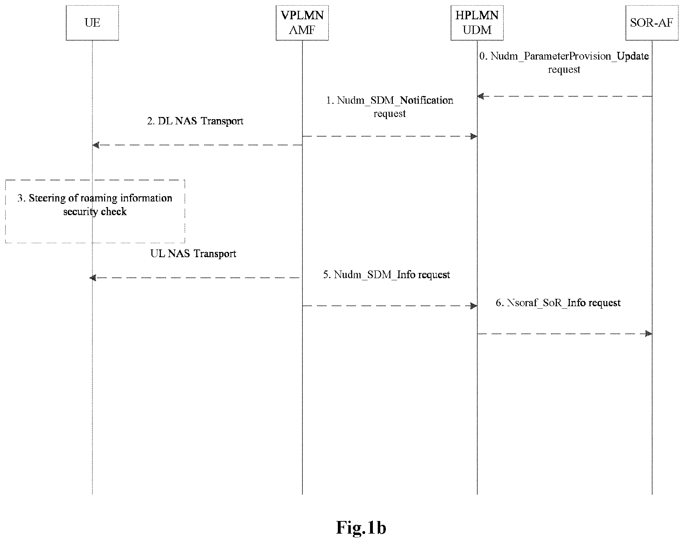

Referring to Fig. 1b, the figure shows the SOR process after the UE registers with VPLMM or HPLMN, including the following steps:
0. The Nudm_ParameterProvision_Update request is sent to the HPLMN UDM request to trigger the UE to update the SOR information, which can include preferred PLMN/access technology combinations, and SOR-CMCI or security package;
1. The HPLMN UDM sends a Nudm_SDM_Notification request message to the VPLMN AMF. The Nudm_SDM_Notification request message is configured to notify the VPLMN AMF to change the subscription data of the UE. The Nudm_SDM_Notification request message include the SOR information that needs to be transparently sent to the UE; An indication of the received SOR information; if there is a SOR-CMCI, also include the SOR-CMCI;
2. The VPLMN AMF sends a DL NAS TRANSPORT message to the UE, including the transparent SOR information sent by the HPLMN UDM;
3. After receiving the SOR message, the UE performs a security check. If the security check is successful, the UE will replace the old information with the preferred PLMN/access technology combinations in the SOR information. If the HPLMN UDM requests confirmation from the UE, the UE sends a UL NAS TRANSPORT message containing the SOR transparent container;
4. If the UL NAS TRANSPORT message contains the SOR transparent container, the VPLMN AMF uses the Nudm_SDM_Inforequest message to forward the SOR transparent container to the HPLMN UDM, and the HPLMN UDM verifies the SOR confirmation information of the UE;
5. If the SOR-AF wake-up policy of the HPLMN exists, and the HPLMN UDM receives the authentication confirmation from the UE, the HPLMN UDM informs the SOR-AF that the SOR-related information it has sent has been successfully sent.

A SOR information processing method in an embodiment of the present disclosure will be described in detail below through specific embodiments and application scenarios with reference to the accompanying drawings.

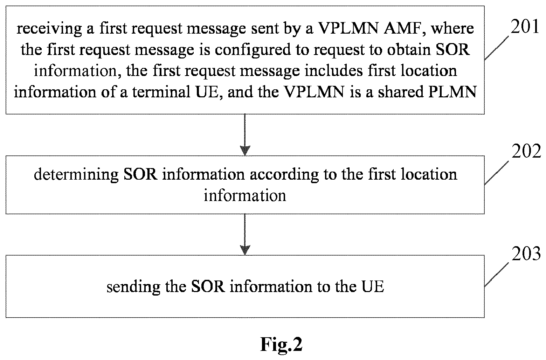

Referring to Fig. 2, an embodiment of the present disclosure provides a Steering of Roaming (SOR) information processing method, performed by a Home Public Land Mobile Network Unified Data Management (HPLMN UDM), including:
Step 201: receiving a first request message sent by a VPLMN AMF, where the first request message is configured to request to obtain SOR information, the first request message includes first location information of a terminal UE, and the VPLMN is a shared PLMN.

The embodiments of the present disclosure are aimed at the scenario where the VPLMN selected by the LTE is a shared PLMN. The HPLMN UDM obtains the first location information of the UE from the VPLMN AMF. Specifically, the request message sent by the VPLMN AMF to the HPLMN UDM during the VPLMM registration process carries the first location information of the UE, for example, the Nudm_SDM_Get request message may carry the first location information of the UE.

In the embodiment of the present disclosure, the HPLMN UDM obtains the first location information of the LTE from the VPLMN AMF, and the first location information is determined by the VPLMN AMF, or the first location information is determined by the UE.

Step 202: determining SOR information according to the first location information.

After the HPLMN UDM obtains the first location information, HPLMN UDM can obtain the SOR information in two ways. One way is to determine the SOR information by the HPLMN UDM itself. This way can be applied to the default scenario of the policy enabled by the SOR-AF of the HPLMN; the other way is that the HPLMN UDM requests SOR information from the SOR-AF, and carries the first location information in the SOR information acquisition request message sent, and the SOR information is determined by the SOR-AF. This method can be applied to a scenario where the SOR-AF of the HPLMN enabling policy exists.

Step 203: sending the SOR information to the UE.

The above SOR information include at least a preferred PLMN and access technology combinations list.

In the embodiment of the present disclosure, when the UE selects the shared PLMN as the VPLMN to access the 3GPP network, the HPLMN receives or obtains the location information of the UE, and assists in determining the SOR information such as the preferred PLMN/access technology combinations list of the UE, thereby avoiding a failure to determine the preferred PLMN/access technology combinations list and other SOR information due to the shared PLMN ID.

In some embodiments, the first location information of the LTE include at least one of:
(1) Tracking Area Identity (TAI) information of the UE;
(2) Cell ID (Cell ID) information; or
(3) Geographic location information of the UE.

In some embodiments, determining the SOR information according to the first location information include:
sending a second request message to a Steering of Roaming Application Function (SOR-AF), where the second request message include the first location information, and the second request message is configured to request to obtain the SOR information; receiving the SOR information sent by the SOR-AF.

In the embodiment of the present disclosure, for the scenario where the SOR-AF enabled policy of the HPLMN exists, the first location information is carried in the second request message for requesting to obtain the SOR information, and the first location information is sent to the SOR-AF, the SOR information is determined by the SOR-AF according to the first location information.

In some implementation manners, sending the second request message to the SOR-AF include: if the SOR information cannot be determined according to the first location information, sending the second request message to the SOR-AF.

In the embodiment of the present disclosure, the HPLMN UDM will first determine whether the obtained LTE location information can meet the requirements of the HPLMN for determining the preferred PLMN selection list; if the requirements of the HPLMN for determining the preferred PLMN selection list are not met, for example: the LTE does not currently access in the network, the information provided by the network may be the general position of a beam, which is not enough to determine the effective UE location. At this time, the HPLMN UDM sends the first location information to the SOR-AF, and the SOR-AF determines the SOR information.

In some embodiments, the determining the SOR information according to the first location information includes: when the SOR information is not able to be determined according to the first location information, obtaining second location information of the LTE from a positioning platform; determining the SOR information according to the second location information.

In the embodiment of the present disclosure, the HPLMN UDM will first judge whether the obtained LTE location information can meet the requirements of the HPLMN for determining the preferred PLMN selection list, and if the judgment cannot meet the requirements of the HPLMN for determining the preferred PLMN selection list, the HPLMN UDM will obtain the UE location information from the positioning platform. (It can be understood that the information type of the second location information is the same as that of the first location information), the positioning platform may be a Global Positioning System (Global Positioning System, GPS) system service platform or a 3GPP positioning service (LoCation Service, LCS) system, the embodiment of the present disclosure does not limit the specific type of positioning platform.

Correspondingly, the determining the SOR information according to the second location information includes: sending a second request message to an SOR-AF, where the second request message includes the second location information, and the second request message is configured to request to obtain the SOR information; receiving the SOR information sent by the SOR-AF.

In the embodiment of the present disclosure, the second location information is carried in the second request message for requesting to obtain the SOR information, the second location information is sent to the SOR-AF, and the SOR-AF determines the SOR information according to the second location information.

In some embodiments, the SOR information further include first location information;
the method further includes:
receiving a confirmation message sent by the UE, where the confirmation message is sent by the LTE when the LTE verifies the first location information according to location information determined by the UE and a verification result indicates a mismatching, where the confirmation message includes indication information configured to indicate that the first location information is not matched.

In the embodiment of the present disclosure, after the SOR information is determined, the first location information is carried in the SOR information provided to the UE, so that the LTE can use the location information determined by itself (the LTE has satellite positioning capability by default, and can determine its own location information) to verify the first location information, so as to determine whether the location information of the UE has been tampered with by the VPLMN. In this way, some PLMNs are prevented from tampering with the location information reported by the LTE or the detected location information of the LTE in order to allow the UE to access, and the accuracy of the location information of the UE is improved. In some implementations, if the UE verifies that the first location information is not matched, the UE may determine the currently selected VPLMN as a non-preferred PLMN, for example, determine the VPLMN as a dirty PLMN, and then re-select the PLMN, that is, use the above SOR information processing method to re-request the HPLMN UDM for SOR information, and registers the PLMN according to the new SOR information.

In some embodiments, the method also include:
after the LTE completes a registration procedure for the VPLMN, obtaining second location information of the LTE from a positioning platform;
performing a procedure of updating the SOR information, according to the second location information.

In the embodiment of the present disclosure, considering that the location information obtained by the LTE may not be accurate enough when it is not accessing the network, it is possible to acquire the location information of the LTE through the positioning platform (such as GPS system service platform, 3GPP LCS system, etc.) after the LTE completes a registration procedure, and then execute the procedure of updating the SOR information according to the location information obtained from the positioning platform, so as to make the SOR information provided to the UE more accurate.

An embodiment of the present disclosure provides a SOR information processing method, the method is executed by the HPLMN UDM, and the method include:
(1) receiving a first request message sent by a Visited PLMN Access and Mobility Management Function (VPLMN AMF), where the first request message is configured to request to obtain SOR information, and the VPLMN is a shared PLMN;
(2) when the first request message does not include location information of a LTE, obtaining the location information of the LTE from a positioning platform;
(3) determining the SOR information according to the location information, where the SOR information include a preferred PLMN and access technology combinations list; and
(4) sending the SOR information to the UE.

In the embodiment of the present disclosure, the first request message does not include the location information of the LTE, which means that the location information of the LTE is not provided when the VPLMN AMF requests the SOR information from the HPLMN UDM, and the HPLMN UDM obtains the location information of the LTE from the positioning platform, and then determine the SOR information according to the location information. Specifically, the HPLMN UDM itself can determine the SOR information, or send the location information to the SOR-AF through a request message, and the SOR-AF can determine the SOR information.

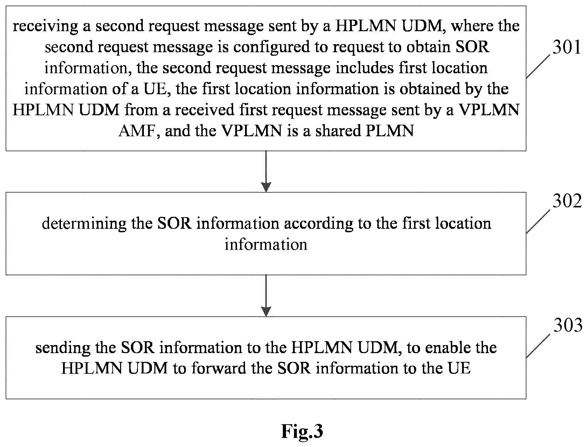

Referring to Fig. 3, an embodiment of the present disclosure provides a SOR information processing method, the method is executed by the SOR-AF, and the method includes:
Step 301: receiving a second request message sent by a HPLMN UDM, where the second request message is configured to request to obtain SOR information, the second request message includes first location information of a UE, the first location information is obtained by the HPLMN UDM from a received first request message sent by a VPLMN AMF, and the VPLMN is a shared PLMN.

In the embodiment of the present disclosure, for the scenario in which the SOR-AF enabling policy of the HPLMN exists, the HPLMN UDM sends the first location information of the UE to the SOR-AF through the second request message, and the SOR-AF sends the first location information of the LTE to the SOR-AF according to the first location information, and the SOR-AF determines the SOR information according to the first location information.

In some implementation manners, the first location information is determined by the VPLMN AMF, or, the first location information is determined by the UE.

Step 302: determining the SOR information according to the first location information;
In the embodiment of the present disclosure, the SOR information include at least a preferred PLMN and access technology combinations list.

In some embodiments, the first location information of the LTE include at least one of:
(1) TAI information of LTE;
(2) Cell ID information; or
(3) Geographic location information of the UE.

Step 303: sending the SOR information to the HPLMN UDM, to enable the HPLMN UDM to forward the SOR information to the UE.

Further, the determining the SOR information according to the first location information includes:
when the SOR information is not able be determined according to the first location information, obtaining second location information of the LTE from a positioning platform;
determining the SOR information according to the second location information.

In the embodiment of the present disclosure, if the SOR-AF determines that the obtained UE location information cannot meet the requirements of the SOR-AF for determining the preferred PLMN selection list, for example: the LTE does not currently access in the network, the information provided by the network may be the general position of a beam, which is not enough to determine the effective LTE location. At this time, the SOR-AF receives the second location information of the UE from the positioning platform. The positioning platform may be a GPS system service platform or a 3GPP LCS system. The embodiment of the present disclosure does not limit the specific type of the positioning platform.

In some embodiments, the method also include:
after the UE completes a registration procedure for the VPLMN, obtaining second location information of the LTE through a positioning platform;
performing a procedure of updating the SOR information, according to the second location information.

In the embodiments of the present disclosure, considering that the location information obtained by the UE may not be accurate enough when it is not accessing the network, after the UE completes the registration, the positioning platform (such as GPS system service platform, 3GPP LCS system, etc.) acquires the location information of the UE, and then execute the procedure of updating the SOR information according to the location information obtained from the positioning platform, so as to make the SOR information provided to the UE more accurate.

An embodiment of the present disclosure provides a SOR information processing method, the method is executed by the SOR-AF, and the method include:
(1) receiving a second request message sent by a Home Public Land Mobile Network Unified Data Management (HPLMN UDM), where the second request message is configured to request to obtain SOR information, the second request message includes second location information of the UE, and the second location information of the UE is obtained by the HPLMN UDM from a positioning platform;
(2) determining the SOR information according to the second location information, where the SOR information includes a preferred PLMN and access technology combinations list;
(3) sending the SOR information to the HPLMN UDM, to enable the HPLMN UDM to forward the SOR information to the UE.

In the embodiment of the present disclosure, the corresponding scenario is that the HPLMN UDM obtains the second location information of the UE from the positioning platform, and provides the second location information to the SOR-AF through the second request message, and the SOR-AF uses the second location information to Determination of SOR information is performed.

An embodiment of the present disclosure provides a SOR information processing method, the method is executed by the SOR-AF, and the method include:
(1) receiving a second request message sent by a Home Public Land Mobile Network Unified Data Management (HPLMN UDM), where the second request message is configured to request to obtain SOR information;
(2) when the second request message does not include location information of the UE, obtaining the location information of the LTE from a positioning platform;
(3) determining the SOR information according to the location information, where the SOR information includes a preferred PLMN and access technology combinations list;
(4) sending the SOR information to the HPLMN UDM, to enable the HPLMN UDM to forward the SOR information to the UE.

In the embodiment of the present disclosure, the second request message does not include the location information of the UE, which means that the location information of the UE is not provided when the HPLMN UDM requests the SOR information from the SOR-AF, and the SOR-AF obtains the location information of the UE location information from the positioning platform, and then determines the SOR information according to the second location information.

The disclosed method is described below in conjunction with specific embodiments :
Embodiment 1: during an initial registration, the UE selects a Shared PLMN as a registered VPLMN, and starts a registration procedure. The VPLMN AMF carries the determined UE location information when initiating the SOR procedure.

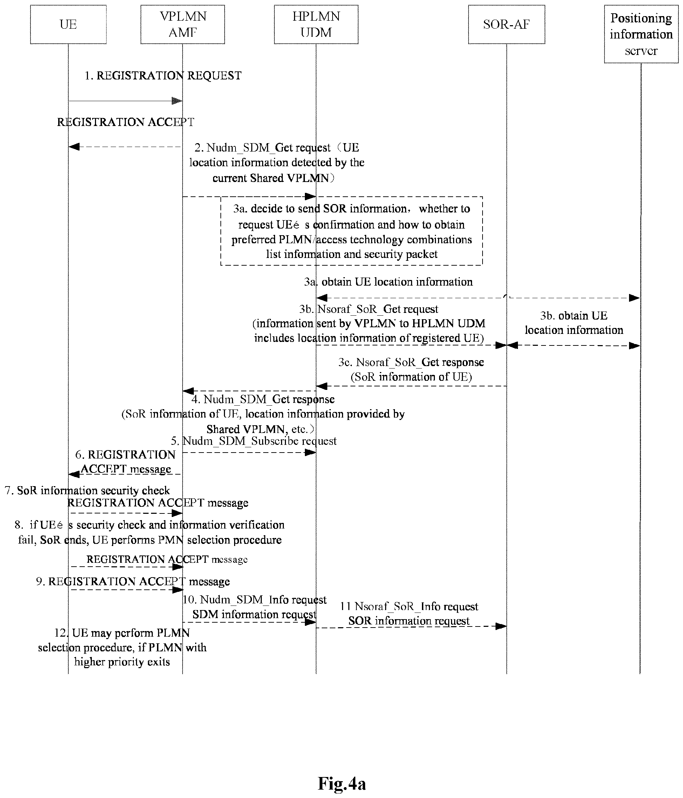

Referring to Fig. 4a, the method include the following steps:
1. The UE sends a Registration Request message to the VPLMN.
2. The VPLMN AMF determines whether it is necessary to forcibly request the HPLMN UDM to retrieve the SOR information during the initial registration based on the subscription information from the HPLMN UDM or the stored UE; if so, send the Nudm_SDM_Get service operation to the HPLMN UDM, and retrieve the SOR information from the HPLMN UDM.
   In the embodiment of the present disclosure, the message include the current location information of the UE determined by the VPLMN AMF (such as the country where the UE is currently located, geographical coordinates or location information in an international area or information such as TAI and Cell ID).
3. 3a) If the SOR-AF wake-up strategy of the HPLMN is default, the HPLMN UDM determines the SOR information, and the HPLMN UDM confirms that it needs to send the SOR information to the UE, and obtains SOR information such as the preferred PLMN and access technology combinations list according to the UE information provided by the VPLMN.

Optionally, in this embodiment of the disclosure, if the location information of the UE provided by the VPLMN cannot meet the requirements of the HPLMN for determining the preferred PLMN selection list or the VPLMN does not provide the location information of the UE, the UDM can obtain the current location of the UE through the positioning platform (such as through GPS system service platform or 3GPP LCS system); then perform step 4.

3b) If the SOR-AF wake-up strategy of the HPLMN exists, the HPLMN UDM sends the Nsoraf_SOR_Info request message to the SOR-AF, and the Nsoraf_SOR_Info request message include the UE's current location information determined by the VPLMN AMF or the UDM obtains the UE's current location through the positioning platform (such as through the GPS system service platform or 3GPP LCS system), and the PLMN ID, Access technology and other information sent by the VPLMN, the SOR-AF determines the SOR information such as the preferred PLMN/access technology combinations list according to the Nsoraf_SOR_Info request message.

Optionally, in this embodiment of the disclosure, if the location information provided by the HPLMN UDM cannot meet the requirements for determining the preferred PLMN and access technology combination list or the UDM does not provide the location information of the LTE, the SOR-AF can obtain the current location of the LTE through the positioning platform (such as through GPS system service platform or 3GPP LCS system);

3c) SOR-AF returns the Nsoraf_SOR_Info request message, which include SOR information such as the generated preferred PLMN/access technology combinations list. Then go to step 4.
4. The HPLMN UDM sends a Nudm_SDM_Get request message to the VPLMN AMF, and the message include SOR information. In the embodiment of the present disclosure, the SOR information include the preferred PLMN/access technology combinations list, the current location information of the UE determined by the VPLMN AMF, and other SOR information or security package;
The following steps 5-7 can refer to steps 5-7 in Fig. 1a;
5. The VPLMN AMF sends a Nudm_SDM_Subscribe request message to the HPLMN UDM, which is configured to notify the HPLMN UDM to change the subscription subscription data, including the change of the SOR information;
6. The VPLMN AMF transparently sends the received SOR information to the UE through the REGISTRATION ACCEPT message;
7. UE performs SOR information security check;
8. If the security check fails, or the LTE is configured to receive SOR information but does not receive it, or if the current location information of the UE determined by the VPLMN AMF in the method of the embodiment of the present disclosure is not matched the current location information determined by the UE, the UE performs PLMN selection process, and end the process.

The UE returns the SOR transparent container in the REGISTRATION COMPLETE message, which contains the reason for the unsuccessful SOR process, such as security check failure, or the UE is configured to receive SOR information but has not received it, or the current location of the UE determined by the VPLMN AMF received by the UE The information is not matched the current location information determined by the UE, etc.

The following steps 9-12 can refer to steps 9-11 in Fig. 1a;
9. If the UDM requests the UE to confirm, the UE includes the SOR transparent container in the REGISTRATION COMPLETE message ;
10. If the VPLMN UDM include the SOR transparent container in the REGISTRATION COMPLETE message, send it to the HPLMN UDM through the Nudm_SDM _Info request message. HPLMN UDM verification confirmation message;
11. HPLMN UDM sends LTE's confirmation message to SOR-AF;
12. The UE can perform the PLMN selection process according to the latest PLMN selection list information.

Embodiment 2: During initial registration, UE selects a Shared PLMN as a registered VPLMN, and starts a registration procedure. The difference from Embodiment 1 is that the registration request sent by the UE carries UE location information.

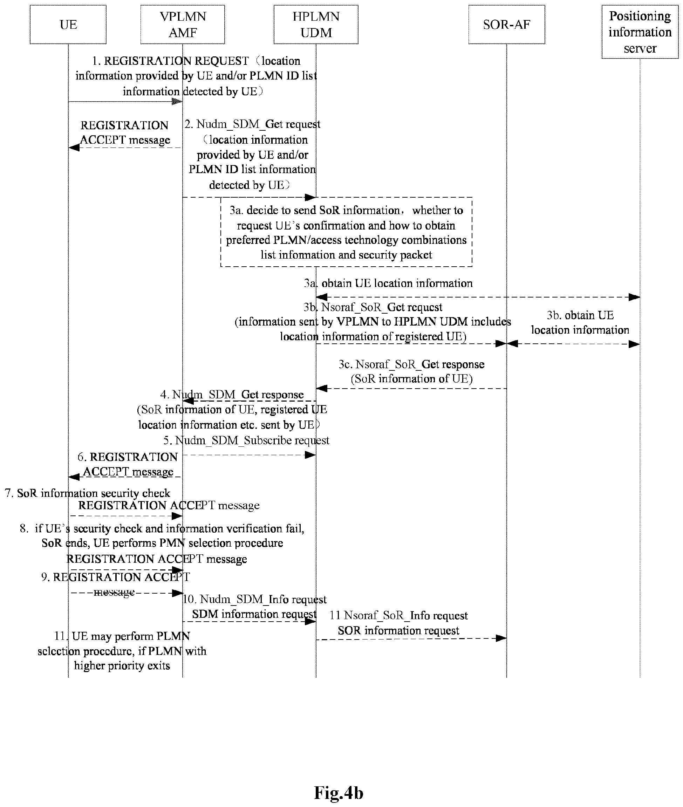

Referring to Fig. 4b, the method include the following steps:
1. The Registration Request message sent by the UE may include information related to HPLMN SOR information decision-making, such as the location information obtained by the UE according to GNSS, and the Registration Request message may also include the list information of the VPLMN currently searched by the UE;
2. The VPLMN AMF determines whether it is necessary to force a request to the HPLMN UDM to retrieve SOR information during the initial registration based on the subscription information from the HPLMN UDM or the stored UE; if so, send the Nudm_SDM_Get service operation to the HPLMN UDM to retrieve the SOR information from the HPLMN UDM. In the embodiment of the present disclosure, the message include the location information sent by the UE and/or the list information of the VPLMN currently searched by the UE.
3. 3a) If the SOR-AF wake-up strategy of the HPLMN is default, the HPLMN UDM determines the SOR information, and the HPLMN UDM confirms that it needs to send the SOR information to the UE, and obtains SOR information such as the preferred PLMN and access technology combinations list according to the UE information provided by the VPLMN.

3b) If the SOR-AF wake-up policy of the HPLMN exists, the HPLMN UDM sends a Nsoraf_SOR_Info request message to the SOR-AF, which include the location information sent by the UE, and the PLMN ID and Access technology sent by the VPLMN;
determine the SOR information such as the preferred PLMN/access technology combinations list, etc.

Optionally, in the embodiment of the present disclosure, if the SOR-AF cannot provide the location information provided by the UDM or the UDM cannot provide the LTE location information for the registered LTE, the SOR-AF can obtain the current location of the UE through the positioning platform (for example, through the GPS system service platform or 3GPP LCS system);
3c) SOR-AF returns the Nsoraf_SOR_Info request message, which include the generated preferred PLMN/access technology combinations list and other SOR information;
4. HPLMN UDM sends Nudm_SDM_Get request message to VPLMN AMF, which include SOR information, SOR information include preferred PLMN/access technology combinations list and location information sent by UE and other SOR information or security packets to VPLMN AMF;

The following steps 5-7 can refer to steps 5-7 in Fig. 1a;
5. The VPLMN AMF sends a Nudm_SDM_Subscribe request message to the HPLMN UDM to notify the HPLMN UDM to change the subscription subscription data, including the change of the SOR information;
6. The VPLMN AMF transparently sends the received SOR information to the UE through the REGISTRATION ACCEPT message;
7. UE performs SOR information security check;
8. If the security check fails, or the LTE is configured to receive SOR information but does not receive it, or the UE receives the location information sent by the UE and/or the list information of the VPLMN that the UE is currently searching for in the method of the embodiment of the present disclosure is determined by the UE If the current location information is not matched, the UE executes the PLMN selection procedure and ends the procedure. The UE returns the SOR transparent container in the REGISTRATION COMPLETE message, which contains the reason for the unsuccessful SOR process, such as security check failure, or the UE is configured to receive SOR information but did not receive it, or the location information sent by the UE received by the UE is not matched. ;

The following steps 9-12 can refer to steps 9-11 in Fig. 1a;
9. If the UDM requests the UE to confirm, the UE include the SOR transparent container in the REGISTRATION COMPLETE message ;
10. If the VPLMN UDM include the SOR transparent container in the REGISTRATION COMPLETE message, send it to the HPLMN UDM through the Nudm_SDM _Info request message. HPLMN UDM verification confirmation message;
11. HPLMN UDM sends LTE's confirmation message to SOR-AF;
12. The UE can perform the PLMN selection process according to the latest PLMN selection list information.

Embodiment 3: HPLMN triggers SOR information update after registration.

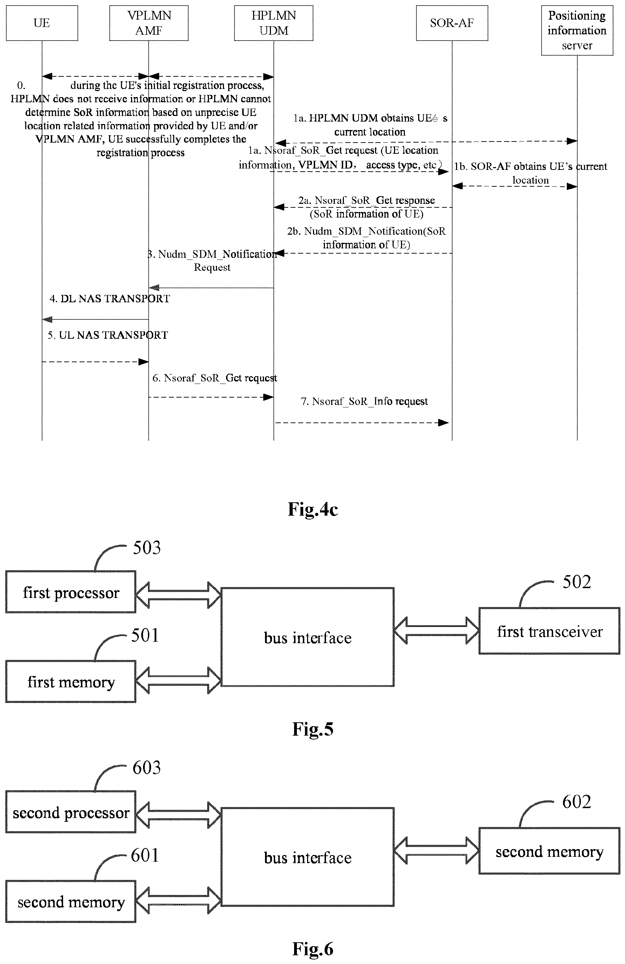

Referring to Fig. 4c, the method include the following steps:
0. During the UE's initial registration process, the UE successfully completes the registration process and camps on the current VPLMN.

This may be that the UE completes the SOR process during the registration process, but does not need to perform PLMN reselection. For example, if the HPLMN does not receive the location information of the UE, or the HPLMN cannot determine the SOR information based on the location information provided by the UE and/or the location information provided by the VPLMN AMF, the HPLMN will not change the PLMN/access technology combinations list of the current LTE temporarily.
1. After the LTE accesses the network, the HPLMN can trigger the positioning process, specifically 1a or 1b:
   1a. HPLMN UDM obtains the current location of LTE through 3GPP LCS, or obtains the location of UE based on satellite positioning platforms such as GPS. HPLMN UDM sends UE location information together with other UE information such as VPLMN ID, access technology, etc. to SOR-AF;
   1b. SOR-AF obtains the current location of UE through 3GPP LCS, or obtains the location of LTE based on satellite positioning platforms such as GPS.
2. SOR-AF determines that the SOR information such as the current preferred PLMN/access technology combinations list needs to be updated, then execute 2a or 2b:
   2a. SOR-AF sends Nsoraf_SOR_Get response response information, including LTE's SOR information;
   2b. SOR-AF sends a Nudm_ParameterProvision_Update request message to HPLMN UDM, which is configured to request HPLMN UDM to trigger UE to update preferred PLMN/access technology combinations and SOR-CMCI (if any) or security package;
3. The HPLMN UDM sends a Nudm_SDM_Notification request message to the VPLMN AMF to notify the VPLMN AMF to change the subscription data of the UE. The Nudm_SDM_Notification request message include the SOR information that needs to be transparently sent to the UE; it also include an indication that the UE confirms the received SOR information and SOR-CMCI (if available);
   The following steps 4-7 can refer to steps 2-5 in Fig. 1b;
4. The VPLMN AMF sends a DL NAS TRANSPORT message to the UE, including the transparent SOR information sent by the HPLMN UDM;
5. After receiving the SOR message, the UE performs a security check. If the security check is successful, the UE will replace the old information with the preferred PLMN/access technology combinations list in the SOR information. If the HPLMN UDM requests confirmation from the UE, the UE sends a UL NAS TRANSPORT message containing the SOR transparent container;
6. If the UL NAS TRANSPORT message contains the SOR transparent container, the VPLMN AMF uses the Nudm_SDM_Info request message to forward the SOR transparent container to the HPLMN UDM, and the HPLMN UDM verifies the SOR confirmation information of the UE;
7. If the SOR-AF wake-up policy of the HPLMN exists, and the HPLMN UDM receives the authentication confirmation from the UE, the HPLMN UDM informs the SOR-AF that the sent SOR-related information has been successfully sent.

Based on the same inventive concept, referring to Fig. 5 , the embodiment of the present disclosure also provides a SOR information processing device 500, which is applied to HPLMN UDM, and the device includes: a first memory 501, a first transceiver 502, a first processor 503:
the first transceiver 502 is configured to receive and send data under the control of the first processor 503 .

In Fig. 5, the bus architecture may include any number of interconnected buses and bridges, specifically one or more processors represented by the first processor 503 and various circuits of the memory represented by the first memory 501 are linked together. The bus architecture can also link together various other circuits such as peripherals, voltage regulators, and power management circuits, etc., which are well known in the art and therefore will not be further described herein. The bus interface provides the interface. The first transceiver 502 may be a plurality of components, including a transmitter and a receiver, providing a unit for communicating with various other devices over transmission media, such transmission media include wireless channels, wired channels, optical cables and other transmission media. The first processor 503 is responsible for managing the bus architecture and general processing, and the first memory 501 can store data used by the first processor 503 when performing operations.

The first processor 503 may be a central processor (CPU), an application specific integrated circuit (Application Specific Integrated Circuit, ASIC), a field programmable gate array (Field-Programmable Gate Array , FPGA) or a complex programmable logic device (Complex Programmable Logic Device, CPLD), the processor can also adopt a multi-core architecture.

In the embodiment of the present disclosure, the first memory 501 is configured to store computer programs; the first transceiver 502 is configured to send and receive data under a control of the first processor; the first processor 503 is configured to read the computer programs in the first memory to perform:
receiving a first request message sent by a Visited PLMN Access and Mobility Management Function (VPLMN AMF), where the first request message is configured to request to obtain SOR information, the first request message includes first location information of a terminal UE, and the VPLMN is a shared PLMN;
determining SOR information according to the first location information;
sending the SOR information to the UE, where the SOR information includes a preferred PLMN and access technology combinations list.

In some embodiments, the first location information is determined by the VPLMN AMF, or the first location information is determined by the UE.

In some embodiments, the determining the SOR information according to the first location information performed by the first processor includes:
sending a second request message to a Steering of Roaming Application Function (SOR-AF), where the second request message include the first location information, and the second request message is configured to request to obtain the SOR information;
receiving the SOR information sent by the SOR-AF.

In some embodiments, the sending the second request message to the SOR-AF performed by the first processor includes:
when the SOR information is not able to be determined according to the first location information, sending the second request message to the SOR-AF.

In some embodiments, the determining the SOR information according to the first location information performed by the first processor includes:
when the SOR information is not able to be determined according to the first location information, obtaining second location information of the LTE from a positioning platform;
determining the SOR information according to the second location information.

In some embodiments, the determining the SOR information according to the second location information performed by the first processor includes:
sending a second request message to an SOR-AF, where the second request message includes the second location information, and the second request message is configured to request to obtain the SOR information;
receiving the SOR information sent by the SOR-AF.

In some embodiments, the SOR information further includes the first location information;
the first processor is further configured to perform:
receiving a confirmation message sent by the UE, where the confirmation message is sent by the LTE when the LTE verifies the first location information according to location information determined by the UE and a verification result indicates a mismatching, where the confirmation message includes indication information configured to indicate that the first location information is not matched.

In some embodiments, the first processor is further configured to perform:
after the LTE completes a registration procedure for the VPLMN, obtaining second location information of the LTE from a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE

The first processor is configured to read the computer programs in the first memory to perform:
receiving a first request message sent by a Visited PLMN Access and Mobility Management Function (VPLMN AMF), where the first request message is configured to request to obtain SOR information, and the VPLMN is a shared PLMN;
when the first request message does not include location information of a LTE, obtaining the location information of the LTE from a positioning platform;
determining the SOR information according to the location information, where the SOR information include a preferred PLMN and access technology combinations list; and
sending the SOR information to the UE.

Based on the same inventive concept, referring to Fig. 6 , the embodiment of the present disclosure also provides a SOR information processing device 600, which is applied to SOR-AF, and the device includes: a second memory 601, a second transceiver 602, a second processor 603:
The second transceiver 602 is configured to receive and send data under the control of the second processor 603.

In Fig. 6, the bus architecture may include any number of interconnected buses and bridges, specifically one or more processors represented by the second processor 603 and various circuits of the memory represented by the second memory 601 are linked together. The bus architecture can also link together various other circuits such as peripherals, voltage regulators, and power management circuits, etc., which are well known in the art and therefore will not be further described herein. The bus interface provides the interface. The second transceiver 602 may be a plurality of elements, including a transmitter and a receiver, providing a unit for communicating with various other devices over transmission media, including wireless channels, wired channels, optical cables, and other transmission media. The second processor 603 is responsible for managing the bus architecture and general processing, and the second memory 601 can store data used by the second processor 603 when performing operations.

The second processor 603 may be a central processor (CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), the processor can also adopt a multi-core architecture.

In the embodiment of the present disclosure, the second memory 601 is configured to store computer programs; the second transceiver 602 is configured to send and receive data under a control of the second processor; the second processor 603 is configured to read the computer programs in the second memory to perform:
receiving a second request message sent by a Home Public Land Mobile Network Unified Data Management (HPLMN UDM), where the second request message is configured to request to obtain SOR information, the second request message includes first location information of a UE, the first location information is obtained by the HPLMN UDM from a received first request message sent by a Visited PLMN Access and Mobility Management Function (VPLMN AMF), and the VPLMN is a shared PLMN;
determining the SOR information according to the first location information, where the SOR information includes a preferred PLMN and access technology combinations list; and
sending the SOR information to the HPLMN UDM, to enable the HPLMN UDM to forward the SOR information to the UE.

In some embodiments, the first location information is determined by the VPLMN AMF, or the first location information is determined by the UE.

In some embodiments, the determining the SOR information according to the first location information performed by the second processor includes:
when the SOR information is not able be determined according to the first location information, obtaining second location information of the UE from a positioning platform;
determining the SOR information according to the second location information.

In some embodiments, the second processor is further configured to perform:
after the LTE completes a registration procedure for the VPLMN, obtaining second location information of the LTE through a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE.

The second processor is further configured to read the computer programs in the second memory to perform:
receiving a second request message sent by a Home Public Land Mobile Network Unified Data Management (HPLMN UDM), where the second request message is configured to request to obtain SOR information, the second request message includes second location information of the UE, and the second location information of the UE is obtained by the HPLMN UDM from a positioning platform;
determining the SOR information according to the second location information, where the SOR information includes a preferred PLMN and access technology combinations list; and
sending the SOR information to the HPLMN UDM, to enable the HPLMN UDM to forward the SOR information to the UE.

The second processor is further configured to read the computer programs in the second memory to perform:
receiving a second request message sent by a Home Public Land Mobile Network Unified Data Management (HPLMN UDM), where the second request message is configured to request to obtain SOR information;
when the second request message does not include location information of the UE, obtaining the location information of the LTE from a positioning platform;
determining the SOR information according to the location information, where the SOR information includes a preferred PLMN and access technology combinations list; and
sending the SOR information to the HPLMN UDM, to enable the HPLMN UDM to forward the SOR information to the UE.

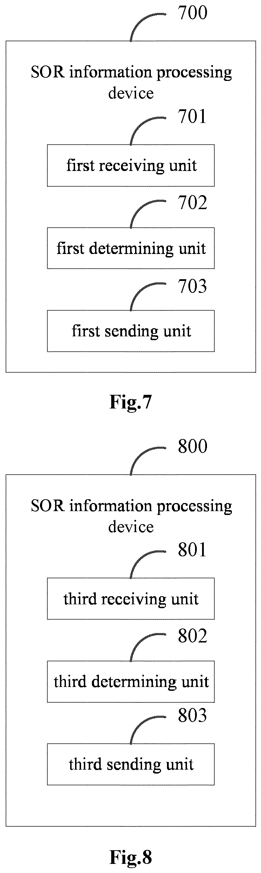

Referring to Fig. 7, a Steering of Roaming (SOR) information processing device 700 is provided in an embodiment of the present disclosure, applied to a Home Public Land Mobile Network Unified Data Management (HPLMN UDM), including:
a first receiving unit 701, configured to receive a first request message sent by a Visited PLMN Access and Mobility Management Function (VPLMN AMF), where the first request message is configured to request to obtain SOR information, the first request message includes first location information of a terminal UE, and the VPLMN is a shared PLMN;
a first determining unit 702, configured to determine SOR information according to the first location information; and
a first sending unit 703, configured to send the SOR information to the UE, where the SOR information includes a preferred PLMN and access technology combinations list.

In some embodiments, the first location information is determined by the VPLMN AMF, or the first location information is determined by the UE.

In some embodiments, the determining the SOR information according to the first location information performed by the first determining unit includes:
sending a second request message to a Steering of Roaming Application Function (SOR-AF), where the second request message include the first location information, and the second request message is configured to request to obtain the SOR information;
receiving the SOR information sent by the SOR-AF.

In some embodiments, the sending the second request message to the SOR-AF performed by the first determining unit includes:
when the SOR information is not able to be determined according to the first location information, sending the second request message to the SOR-AF.

In some embodiments, the determining the SOR information according to the first location information performed by the first determining unit includes:
when the SOR information is not able to be determined according to the first location information, obtaining second location information of the LTE from a positioning platform;
determining the SOR information according to the second location information.

In some embodiments, the determining the SOR information according to the second location information performed by the first determining unit includes:
sending a second request message to an SOR-AF, where the second request message includes the second location information, and the second request message is configured to request to obtain the SOR information;
receiving the SOR information sent by the SOR-AF.

In some embodiments, the SOR information further includes the first location information;
the method further include:
receiving a confirmation message sent by the UE, where the confirmation message is sent by the LTE when the LTE verifies the first location information according to location information determined by the UE and a verification result indicates a mismatching, where the confirmation message includes indication information configured to indicate that the first location information is not matched.

In some embodiments, the device further includes a first processing unit configured to:
after the LTE completes a registration procedure for the VPLMN, obtain second location information of the LTE from a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE.

A Steering of Roaming (SOR) information processing device is further provided in an embodiment of the present disclosure, applied to a Home Public Land Mobile Network Unified Data Management (HPLMN UDM), including:
a second receiving unit, configured to receive a first request message sent by a Visited PLMN Access and Mobility Management Function (VPLMN AMF), where the first request message is configured to request to obtain SOR information, and the VPLMN is a shared PLMN;
a first obtaining unit, configured to, when the first request message does not include location information of a LTE, obtain the location information of the LTE from a positioning platform;
a second determining unit, configured to determine the SOR information according to the location information, where the SOR information include a preferred PLMN and access technology combinations list; and
a second sending unit, configured to send the SOR information to the UE.

Referring to Fig. 8, a Steering of Roaming (SOR) information processing device 800 is further provided in an embodiment of the present disclosure, applied to a Steering of Roaming Application Function (SOR-AF), including:
a third receiving unit 801, configured to receive a second request message sent by a Home Public Land Mobile Network Unified Data Management (HPLMN UDM), where the second request message is configured to request to obtain SOR information, the second request message includes first location information of a UE, the first location information is obtained by the HPLMN UDM from a received first request message sent by a Visited PLMN Access and Mobility Management Function (VPLMN AMF), and the VPLMN is a shared PLMN;
a third determining unit 802, configured to determine the SOR information according to the first location information, where the SOR information includes a preferred PLMN and access technology combinations list; and
a third sending unit 803, configured to send the SOR information to the HPLMN UDM, to enable the HPLMN UDM to forward the SOR information to the UE.

In some embodiments, the first location information is determined by the VPLMN AMF, or the first location information is determined by the UE.

In some embodiments, the determining the SOR information according to the first location information performed by the third determining unit includes:
when the SOR information is not able be determined according to the first location information, obtaining second location information of the LTE from a positioning platform;
determining the SOR information according to the second location information.

In some embodiments, a second processing unit included in the device is further configured to perform:
after the LTE completes a registration procedure for the VPLMN, obtaining second location information of the LTE through a positioning platform;
performing a procedure of updating the SOR information, according to the second location information.

In some embodiments, the first location information includes at least one of:
Tracking Area Identity (TAI) information of the UE;
cell identity (Cell ID) information; or
geographical location information of the UE

A Steering of Roaming (SOR) information processing device is further provided in an embodiment of the present disclosure, applied to a Steering of Roaming Application Function (SOR-AF), including:
a fourth receiving unit, configured to receive a second request message sent by a Home Public Land Mobile Network Unified Data Management (HPLMN UDM), where the second request message is configured to request to obtain SOR information, the second request message includes second location information of the LTE, and the second location information of the LTE is obtained by the HPLMN UDM from a positioning platform;
a fourth determining unit, configured to determine the SOR information according to the second location information, where the SOR information includes a preferred PLMN and access technology combinations list; and
a fourth sending unit, configured to send the SOR information to the HPLMN UDM, to enable the HPLMN UDM to forward the SOR information to the UE.

A Steering of Roaming (SOR) information processing device is further provided in an embodiment of the present disclosure, applied to a Steering of Roaming Application Function (SOR-AF), including:
a fifth receiving unit, configured to receive a second request message sent by a Home Public Land Mobile Network Unified Data Management (HPLMN UDM), where the second request message is configured to request to obtain SOR information;
a second obtaining unit, configured to, when the second request message does not include location information of the LTE, obtaining the location information of the LTE from a positioning platform;
a fifth determining unit, configured to determine the SOR information according to the location information, where the SOR information includes a preferred PLMN and access technology combinations list; and
a fifth sending unit, configured to send the SOR information to the HPLMN UDM, to enable the HPLMN UDM to forward the SOR information to the UE.

It should be noted that the division of the units in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, the essence of the technical solution of the present disclosure or the part that contributes to the related technology or all or part of the technical solution can be embodied in the form of a software product, and the computer software product is stored in a storage medium. Several instructions are included to make a computer device (which may be a personal computer, a server, or a network device, etc.) or a processor (processor) execute all or part of the steps of the methods described in various embodiments of the present disclosure. The aforementioned storage media include: U disk, mobile hard disk, read-only memory (Read-Only Memory, ROM), random access memory (Random Access Memory, RAM), magnetic disk or optical disk and other media that can store program codes..

An embodiment of the present disclosure provides a processor-readable storage medium. The processor-readable storage medium may be any available medium or data storage device that can be accessed by a processor, including but not limited to a magnetic memory (such as a floppy disk, a hard disk, a magnetic tape, magneto-optical disk (MO), etc.), optical memory (such as CD, DVD, BD, HVD, etc.), and semiconductor memory (such as ROM, EPROM, EEPROM, non-volatile memory (NAND FLASH), solid-state hard drive (SSD) ), etc.

Those skilled in the art should understand that the embodiments of the present disclosure may be provided as methods, systems, or computer program products. Accordingly, the present disclosure can take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage, optical storage, etc.) having computer-usable program code embodied therein.

The present disclosure is described with reference to flowchart illustrations and/or block diagrams of methods, apparatus (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general purpose computer, special purpose computer, embedded processor, or processor of other programmable data processing equipment to produce a machine, such that instructions executed by the processor of the computer or other programmable data processing equipment produce Means for realizing the functions specified in one or more procedures of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product, the instruction device realizes the function specified in one or more procedures of the flow chart and/or one or more blocks of the block diagram.

These processor-executable instructions can also be loaded onto a computer or other programmable data processing device, causing a series of operational steps to be performed on the computer or other programmable device to produce a computer-implemented. The executed instructions provide steps for implementing the functions specified in the flowchart procedure or procedures and/or block diagram procedures or blocks.

It should be noted that it should be understood that the division of the above modules is only a division of logical functions, and may be fully or partially integrated into a physical entity or physically separated during actual implementation. And these modules can all be implemented in the form of calling software through processing elements; they can also be implemented in the form of hardware; some modules can also be implemented in the form of calling software through processing elements, and some modules can be implemented in the form of hardware. For example, a certain module can be a separate processing element, or it can be integrated into a chip of the above-mentioned device. In addition, it can also be stored in the memory of the above-mentioned device in the form of program code, and processed by one of the above-mentioned devices. The component invokes and executes the functions of the modules identified above. The implementation of other modules is similar. In addition, all or part of these modules can be integrated together, and can also be implemented independently. The processing element mentioned here may be an integrated circuit with signal processing capability. In the implementation process, each step of the above method or each module above can be completed by an integrated logic circuit of hardware in the processor element or an instruction in the form of software.

For example, each module, unit, subunit or submodule may be one or more integrated circuits configured to implement the above method, for example: one or more specific integrated circuits (Application Specific Integrated Circuit, ASIC), or, one or Multiple microprocessors (digital signal processor, DSP), or, one or more field programmable gate arrays (Field Programmable Gate Array, FPGA), etc. For another example, when one of the above modules is implemented in the form of a processing element scheduling program code, the processing element may be a general-purpose processor, such as a central processing unit (Central Processing Unit, CPU) or other processors that can call program codes. For another example, these modules can be integrated together and implemented in the form of a system-on-a-chip (SOC).

Furthermore, the terms "including" and "having", as well as any variations thereof, are intended to cover a non- exclusive inclusion, for example, a process, method, system, product or device including a sequence of steps or elements is not necessarily limited to the expressly listed instead, may include other steps or elements not explicitly listed or inherent to the process, method, product or apparatus. In addition, the use of "and/or" in the description and claims means at least one of the connected objects, such as A and/or B and/or C, means that it include A alone, B alone, C alone, and both A and B Existence, both B and C exist, both A and C exist, and there are 7 situations where A, B, and C all exist. Similarly, the use of "at least one of A and B" in the present specification and claims should be understood as "A alone, B alone, or both A and B exist".

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A Steering of Roaming (SOR) information processing method, performed by a Home Public Land Mobile Network Unified Data Management (HPLMN UDM), comprising:
receiving a first request message sent by a Visited PLMN Access and Mobility Management Function (VPLMN AMF), wherein the first request message is configured to request to obtain SOR information, the first request message comprises first location information of a terminal UE, and the VPLMN is a shared PLMN;
determining SOR information according to the first location information;
sending the SOR information to the UE, wherein the SOR information comprises a preferred PLMN and access technology combinations list.

2. The method according to claim 1, wherein the first location information is determined by the VPLMN AMF, or the first location information is determined by the UE.

3. The method according to claim 1, wherein the determining the SOR information according to the first location information comprises:
sending a second request message to a Steering of Roaming Application Function (SOR-AF), wherein the second request message comprise the first location information, and the second request message is configured to request to obtain the SOR information;
receiving the SOR information sent by the SOR-AF.

4. The method according to claim 3, wherein the sending the second request message to the SOR-AF comprises:
when the SOR information is not able to be determined according to the first location information, sending the second request message to the SOR-AF.

5. The method according to claim 1, wherein the determining the SOR information according to the first location information comprises:
when the SOR information is not able to be determined according to the first location information, obtaining second location information of the LTE from a positioning platform;
determining the SOR information according to the second location information.

6. The method according to claim 5, wherein the determining the SOR information according to the second location information comprises:
sending a second request message to an SOR-AF, wherein the second request message comprises the second location information, and the second request message is configured to request to obtain the SOR information;
receiving the SOR information sent by the SOR-AF.

7. The method according to claim 1, wherein the SOR information further comprises the first location information;
the method further comprise:
receiving a confirmation message sent by the UE, wherein the confirmation message is sent by the LTE when the UE verifies the first location information according to location information determined by the UE and a verification result indicates a mismatching, wherein the confirmation message comprises indication information configured to indicate that the first location information is not matched.

8. The method according to claim 1, wherein the method further comprises:
after the UE completes a registration procedure for the VPLMN, obtaining second location information of the LTE from a positioning platform;
performing a procedure of updating the SOR information, according to the second location information.

9. The method according to claim 1, wherein the first location information comprises at least one of:
Tracking Area Identity (TAI) information of the UE;
cell identity (Cell ID) information; or
geographical location information of the UE.

10. A Steering of Roaming (SOR) information processing method, performed by a Home Public Land Mobile Network Unified Data Management (HPLMN UDM), comprising:
receiving a first request message sent by a Visited PLMN Access and Mobility Management Function (VPLMN AMF), wherein the first request message is configured to request to obtain SOR information, and the VPLMN is a shared PLMN;
when the first request message does not include location information of a LTE, obtaining the location information of the LTE from a positioning platform;
determining the SOR information according to the location information, wherein the SOR information comprise a preferred PLMN and access technology combinations list; and
sending the SOR information to the UE.

11. A Steering of Roaming (SOR) information processing method, performed by a Steering of Roaming Application Function (SOR-AF), comprising:
receiving a second request message sent by a Home Public Land Mobile Network Unified Data Management (HPLMN UDM), wherein the second request message is configured to request to obtain SOR information, the second request message comprises first location information of a LTE, the first location information is obtained by the HPLMN UDM from a received first request message sent by a Visited PLMN Access and Mobility Management Function (VPLMN AMF), and the VPLMN is a shared PLMN;
determining the SOR information according to the first location information, wherein the SOR information comprises a preferred PLMN and access technology combinations list; and
sending the SOR information to the HPLMN UDM, to enable the HPLMN UDM to forward the SOR information to the UE.

12. The method according to claim 11, wherein the first location information is determined by the VPLMN AMF, or the first location information is determined by the UE.

13. The method according to claim 11, wherein the determining the SOR information according to the first location information comprises:
when the SOR information is not able be determined according to the first location information, obtaining second location information of the LTE from a positioning platform;
determining the SOR information according to the second location information.

14. The method according to claim 11, wherein the method further comprises:
after the UE completes a registration procedure for the VPLMN, obtaining second location information of the LTE through a positioning platform;
performing a procedure of updating the SOR information, according to the second location information.

15. The method according to claim 11, wherein the first location information comprises at least one of:
Tracking Area Identity (TAI) information of the UE;
cell identity (Cell ID) information; or
geographical location information of the UE.

16. A Steering of Roaming (SOR) information processing method, performed by a Steering of Roaming Application Function (SOR-AF), comprising:
receiving a second request message sent by a Home Public Land Mobile Network Unified Data Management (HPLMN UDM), wherein the second request message is configured to request to obtain SOR information, the second request message comprises second location information of the UE, and the second location information of the UE is obtained by the HPLMN UDM from a positioning platform;
determining the SOR information according to the second location information, wherein the SOR information comprises a preferred PLMN and access technology combinations list; and
sending the SOR information to the HPLMN UDM, to enable the HPLMN UDM to forward the SOR information to the UE.

17. A Steering of Roaming (SOR) information processing method, performed by a Steering of Roaming Application Function (SOR-AF), comprising:
receiving a second request message sent by a Home Public Land Mobile Network Unified Data Management (HPLMN UDM), wherein the second request message is configured to request to obtain SOR information;
when the second request message does not include location information of the UE, obtaining the location information of the LTE from a positioning platform;
determining the SOR information according to the location information, wherein the SOR information comprises a preferred PLMN and access technology combinations list; and
sending the SOR information to the HPLMN UDM, to enable the HPLMN UDM to forward the SOR information to the UE.

18. A Steering of Roaming (SOR) information processing device, applied to a Home Public Land Mobile Network Unified Data Management (HPLMN UDM), comprising a first memory, a first transceiver and a first processor;
the first memory is configured to store computer programs; the first transceiver is configured to send and receive data under a control of the first processor; the first processor is configured to read the computer programs in the first memory to perform:
receiving a first request message sent by a Visited PLMN Access and Mobility Management Function (VPLMN AMF), wherein the first request message is configured to request to obtain SOR information, the first request message comprises first location information of a terminal UE, and the VPLMN is a shared PLMN;
determining SOR information according to the first location information;
sending the SOR information to the UE, wherein the SOR information comprises a preferred PLMN and access technology combinations list.

19. The device according to claim 18, wherein the first location information is determined by the VPLMN AMF, or the first location information is determined by the UE.

20. The device according to claim 18, wherein the determining the SOR information according to the first location information performed by the first processor comprises:
sending a second request message to a Steering of Roaming Application Function (SOR-AF), wherein the second request message comprise the first location information, and the second request message is configured to request to obtain the SOR information;
receiving the SOR information sent by the SOR-AF.

21. The device according to claim 20, wherein the sending the second request message to the SOR-AF performed by the first processor comprises:
when the SOR information is not able to be determined according to the first location information, sending the second request message to the SOR-AF.

22. The device according to claim 18, wherein the determining the SOR information according to the first location information performed by the first processor comprises:
when the SOR information is not able to be determined according to the first location information, obtaining second location information of the LTE from a positioning platform;
determining the SOR information according to the second location information.

23. The device according to claim 22, wherein the determining the SOR information according to the second location information performed by the first processor comprises:
sending a second request message to an SOR-AF, wherein the second request message comprises the second location information, and the second request message is configured to request to obtain the SOR information;
receiving the SOR information sent by the SOR-AF.

24. The device according to claim 18, wherein the SOR information further comprises the first location information;
the first processor is further configured to perform:
receiving a confirmation message sent by the UE, wherein the confirmation message is sent by the LTE when the LTE verifies the first location information according to location information determined by the UE and a verification result indicates a mismatching, wherein the confirmation message comprises indication information configured to indicate that the first location information is not matched.

25. The device according to claim 18, wherein the first processor is further configured to perform:
after the LTE completes a registration procedure for the VPLMN, obtaining second location information of the LTE from a positioning platform;
performing a procedure of updating the SOR information, according to the second location information.

26. The device according to claim 18, wherein the first location information comprises at least one of:
Tracking Area Identity (TAI) information of the UE;
cell identity (Cell ID) information; or
geographical location information of the UE.

27. A Steering of Roaming (SOR) information processing device, applied to a Home Public Land Mobile Network Unified Data Management (HPLMN UDM), comprising a first memory, a first transceiver and a first processor:
the first memory is configured to store computer programs; the first transceiver is configured to send and receive data under a control of the first processor; the first processor is configured to read the computer programs in the first memory to perform:
receiving a first request message sent by a Visited PLMN Access and Mobility Management Function (VPLMN AMF), wherein the first request message is configured to request to obtain SOR information, and the VPLMN is a shared PLMN;
when the first request message does not include location information of a UE, obtaining the location information of the LTE from a positioning platform;
determining the SOR information according to the location information, wherein the SOR information comprise a preferred PLMN and access technology combinations list; and
sending the SOR information to the UE.

28. A Steering of Roaming (SOR) information processing device, applied to a Steering of Roaming Application Function (SOR-AF), comprising a second memory, a second transceiver and a second processor:
the second memory is configured to store computer programs; the second transceiver is configured to send and receive data under a control of the second processor; the second processor is configured to read the computer programs in the second memory to perform:
receiving a second request message sent by a Home Public Land Mobile Network Unified Data Management (HPLMN UDM), wherein the second request message is configured to request to obtain SOR information, the second request message comprises first location information of a LTE, the first location information is obtained by the HPLMN UDM from a received first request message sent by a Visited PLMN Access and Mobility Management Function (VPLMN AMF), and the VPLMN is a shared PLMN;
determining the SOR information according to the first location information, wherein the SOR information comprises a preferred PLMN and access technology combinations list; and
sending the SOR information to the HPLMN UDM, to enable the HPLMN UDM to forward the SOR information to the UE.

29. The device according to claim 28, wherein the first location information is determined by the VPLMN AMF, or the first location information is determined by the UE.

30. The device according to claim 28, wherein the determining the SOR information according to the first location information performed by the second processor comprises:
when the SOR information is not able be determined according to the first location information, obtaining second location information of the LTE from a positioning platform;
determining the SOR information according to the second location information.

31. The device according to claim 28, wherein the second processor is further configured to perform:
after the UE completes a registration procedure for the VPLMN, obtaining second location information of the LTE through a positioning platform;
performing a procedure of updating the SOR information, according to the second location information.

32. The device according to claim 28, wherein the first location information comprises at least one of:
Tracking Area Identity (TAI) information of the UE;
cell identity (Cell ID) information; or
geographical location information of the UE.

33. A Steering of Roaming (SOR) information processing device, applied to a Steering of Roaming Application Function (SOR-AF), comprising a second memory, a second transceiver and a second processor:
the second memory is configured to store computer programs; the second transceiver is configured to send and receive data under a control of the second processor; the second processor is configured to read the computer programs in the second memory to perform:
receiving a second request message sent by a Home Public Land Mobile Network Unified Data Management (HPLMN UDM), wherein the second request message is configured to request to obtain SOR information, the second request message comprises second location information of the UE, and the second location information of the UE is obtained by the HPLMN UDM from a positioning platform;
determining the SOR information according to the second location information, wherein the SOR information comprises a preferred PLMN and access technology combinations list; and
sending the SOR information to the HPLMN UDM, to enable the HPLMN UDM to forward the SOR information to the UE.

34. A Steering of Roaming (SOR) information processing device, applied to a Steering of Roaming Application Function (SOR-AF), comprising a second memory, a second transceiver and a second processor:
the second memory is configured to store computer programs; the second transceiver is configured to send and receive data under a control of the second processor; the second processor is configured to read the computer programs in the second memory to perform:
receiving a second request message sent by a Home Public Land Mobile Network Unified Data Management (HPLMN UDM), wherein the second request message is configured to request to obtain SOR information;
when the second request message does not include location information of the UE, obtaining the location information of the LTE from a positioning platform;
determining the SOR information according to the location information, wherein the SOR information comprises a preferred PLMN and access technology combinations list; and
sending the SOR information to the HPLMN UDM, to enable the HPLMN UDM to forward the SOR information to the UE.

35. A Steering of Roaming (SOR) information processing device, applied to a Home Public Land Mobile Network Unified Data Management (HPLMN UDM), comprising:
a first receiving unit, configured to receive a first request message sent by a Visited PLMN Access and Mobility Management Function (VPLMN AMF), wherein the first request message is configured to request to obtain SOR information, the first request message comprises first location information of a terminal UE, and the VPLMN is a shared PLMN;
a first determining unit, configured to determine SOR information according to the first location information; and
a first sending unit, configured to send the SOR information to the UE, wherein the SOR information comprises a preferred PLMN and access technology combinations list.

36. A Steering of Roaming (SOR) information processing device, applied to a Home Public Land Mobile Network Unified Data Management (HPLMN UDM), comprising:
a second receiving unit, configured to receive a first request message sent by a Visited PLMN Access and Mobility Management Function (VPLMN AMF), wherein the first request message is configured to request to obtain SOR information, and the VPLMN is a shared PLMN;
a first obtaining unit, configured to, when the first request message does not include location information of a LTE, obtain the location information of the LTE from a positioning platform;
a second determining unit, configured to determine the SOR information according to the location information, wherein the SOR information comprise a preferred PLMN and access technology combinations list; and
a second sending unit, configured to send the SOR information to the UE.

37. A Steering of Roaming (SOR) information processing device, applied to a Steering of Roaming Application Function (SOR-AF), comprising:
a third receiving unit, configured to receive a second request message sent by a Home Public Land Mobile Network Unified Data Management (HPLMN UDM), wherein the second request message is configured to request to obtain SOR information, the second request message comprises first location information of a UE, the first location information is obtained by the HPLMN UDM from a received first request message sent by a Visited PLMN Access and Mobility Management Function (VPLMN AMF), and the VPLMN is a shared PLMN;
a third determining unit, configured to determine the SOR information according to the first location information, wherein the SOR information comprises a preferred PLMN and access technology combinations list; and
a third sending unit, configured to send the SOR information to the HPLMN UDM, to enable the HPLMN UDM to forward the SOR information to the UE.

38. A Steering of Roaming (SOR) information processing device, applied to a Steering of Roaming Application Function (SOR-AF), comprising:
a fourth receiving unit, configured to receive a second request message sent by a Home Public Land Mobile Network Unified Data Management (HPLMN UDM), wherein the second request message is configured to request to obtain SOR information, the second request message comprises second location information of the UE, and the second location information of the UE is obtained by the HPLMN UDM from a positioning platform;
a fourth determining unit, configured to determine the SOR information according to the second location information, wherein the SOR information comprises a preferred PLMN and access technology combinations list; and
a fourth sending unit, configured to send the SOR information to the HPLMN UDM, to enable the HPLMN UDM to forward the SOR information to the UE.

39. A Steering of Roaming (SOR) information processing device, applied to a Steering of Roaming Application Function (SOR-AF), comprising:
a fifth receiving unit, configured to receive a second request message sent by a Home Public Land Mobile Network Unified Data Management (HPLMN UDM), wherein the second request message is configured to request to obtain SOR information;
a second obtaining unit, configured to, when the second request message does not include location information of the UE, obtaining the location information of the LTE from a positioning platform;
a fifth determining unit, configured to determine the SOR information according to the location information, wherein the SOR information comprises a preferred PLMN and access technology combinations list; and
a fifth sending unit, configured to send the SOR information to the HPLMN UDM, to enable the HPLMN UDM to forward the SOR information to the UE.

40. A processor-readable storage medium, wherein the processor-readable storage medium stores a computer program, the computer program is configured to enable the processor to perform a Steering of Roaming (SOR) information processing method according to any one of claims 1 to 9, or an SOR information processing method according to claim 10, or an SOR information processing method according to any one of claims 11 to 15, or an SOR information processing method according to claim 16, or an SOR information processing method according to claim 17.
